# EUROPÄISCHE PATENTSCHRIFT

(11) **EP 1 705 626 B1**
(45) Veröffentlichungstag und Bekanntmachung des Hinweises auf die Patenterteilung: **17.10.2007**
(21) Anmeldenummer: 05102380.2
(22) Anmeldetag: 24.03.2005
(51) Int. Cl.: G09F 13/22

(54) **Beleuchtete Dekorabdeckung**
Illuminated decoration cover
Couverture décorative éclairée

(43) Veröffentlichungstag der Anmeldung: 27.09.2006
(73) Patentinhaber: Schreiner Group GmbH & Co. KG, 85764 Oberschleissheim (DE)
(72) Erfinder: Krumpe, Joachim, 85649 Brunnthal (DE); Otte, Carsten, 80796 München (DE); Narwark, Oliver, 80636 München (DE)
(74) Vertreter: Kehl, Günther

(56) Entgegenhaltungen:
- EP-A- 1 154 398
- DE-A1- 10 321 014
- DE-A1- 10 338 205
- US-A- 5 692 327
- US-A1- 2002 003 696
- US-B1- 6 517 226

## Beschreibung

Die Erfindung bezieht sich auf eine beleuchtete Kraftfahrzeug-Einstiegsleiste aus lichtdurchlässigem Kunststoffmaterial. Speziell betrifft sie eine Kraftfahrzeug-Einstiegsleiste für den Automobil-Innenbereich.

Nach dem Stand der Technik (DE 201 031 33 U1 und DE 442 19 42 A1) werden beleuchtete Dekorabdeckungen für Anwendungen im Automobilbereich, speziell Einstiegsleisten bisher aus Kunststoffleisten gefertigt, auf die eine Lichtquelle, beispielsweise eine Elektrolumineszenzlampe, angebracht wird. Derartige Aufbauten besitzen den Nachteil, dass die Lichtquelle separat von der Kunststoffleiste gefertigt und dann aufgebracht werden muß. Weiterhin wird üblicherweise, um einen Schriftzug oder Symbole erkennbar zu machen, oberhalb der Kunststoffleiste eine lichtundurchlässige Maske aus Metall aufgebracht, was den Herstellungsprozeß nochmals aufwändiger und teurer macht. Durch diese Aufbauten ergeben sich zudem Baudicken, die für den automobilen Anwendungsbereich oftmals sehr groß sind.

DE 103 38 205 offenbart ein Kraftfahrzeug-Bauteil, das einen Grundkörper und eine auf dem Grundkörper angeordnete elektrolumineszierende Schicht aufweist, mittels der das Bauteil beleuchtbar ist. Der Grundkörper weist eine elektrische Anordnung auf, die zur Versorgung der elektrolumineszierenden Schicht mit elektrischer Energie dient.

DE 103 21 014 A1 offenbart eine Vorfeldbeleuchtungseinrichtung für ein Kraftfahrzeug. Die Vorfeldbeleuchtungseinrichtung weist eine elektrolumineszierende Schicht zum Beleuchten mindestens eines Teiles eines Umfeldes des Kraftfahrzeuges auf. Eine derartige Vorfeld-beleuchtungseinrichtung kann an einem Seitenspiegel und/oder einem Stoßfänger vorgesehen sein. Es kann zudem ein Steuergerät vorgesehen sein, mittels dessen die Vorfeldbeleuchtungseinrichtung durch Betätigen eines berührungslos verwendbaren Kraftfahrzeugschlüssels einschaltbar ist.

US 6 517 226 B1 (D3) beschreibt ein Innenbeleuchtungssystem für ein Kraftfahrzeug. Das Innenbeleuchtungssystem weist Leuchtfelder auf, die aus lichtemittierenden, folienförmigen Platten bestehen, die an die Bordstromversorgung angeschlossen sind. Die lichtemittierenden, folienförmigen Platten bestehen aus Elektrolumineszenzfolien oder lichtemittierenden Polymerfolien. Die lichtemittierenden Platten können am Fahrzeughimmel, an Säulen oder am Armaturenbrett des Fahrzeugs angebracht sein und sie sind einstellbar hinsichtlich Leuchtintensität, Farbe und Farbton.

Der Erfindung liegt die Aufgabe zugrunde, eine beleuchtete Kraftfahrzeug-Einstiegsleiste bereitzustellen, die in der Herstellung deutlich einfacher und günstiger ist und bei der der Herstellprozeß der Lichtquelle integraler Bestandteil der Herstellung der gesamten Kraftfahrzeug-Einstiegsleiste ist. Weiterhin ist Aufgabe der Erfindung, eine Kraftfahrzeug-Einstiegsleiste mit möglichst geringer Bauhöhe bereit zu stellen.

Diese Aufgaben werden durch eine Kraftfahrzeug-Einstiegsleiste gelöst, wie sie im Patentanspruch 1 angegeben ist.

Eine besonders bevorzugte Ausführungsform der Erfindung besteht darin, dass unterhalb der Kunststoffleiste eine Metallschicht aufgebracht ist, die vorzugsweise transluzent ist.

Der Erfindung wird nachfolgend anhand von in den Zeichnungen schematisch dargestellten Ausführungsbeispielen näher erläutert. Die Zeichnungen sind nicht maßstabsgetreu. Vielmehr sind die Dicken der Schichten des Elektrolumineszenzelements im Vergleich zu den anderen Abmessungen stark vergrößert gezeichnet.
Figur 1 zeigt eine erfindungsgemäße Deckorabdeckung in Draufsicht;
Figur 2 zeigt eine erste Ausführungsform der Erfindung in Schnittdarstellung;
Figur 3 zeigt eine einfachere Ausführungsvariante zu der Ausführungsform gemäß Figur 2;
Figur 4 zeigt den Aufbau der Ausführungsvariante aus Figur 3, adaptiert für den Betrieb mit Wechselspannung;
Figur 5 zeigt eine zweite Ausführungsform der Erfindung;
Figur 6 zeigt eine erste Variante der Ausführungsform aus Figur 5;
Figur 7 zeigt eine zweite Variante der Ausführungsform aus Figur 5.

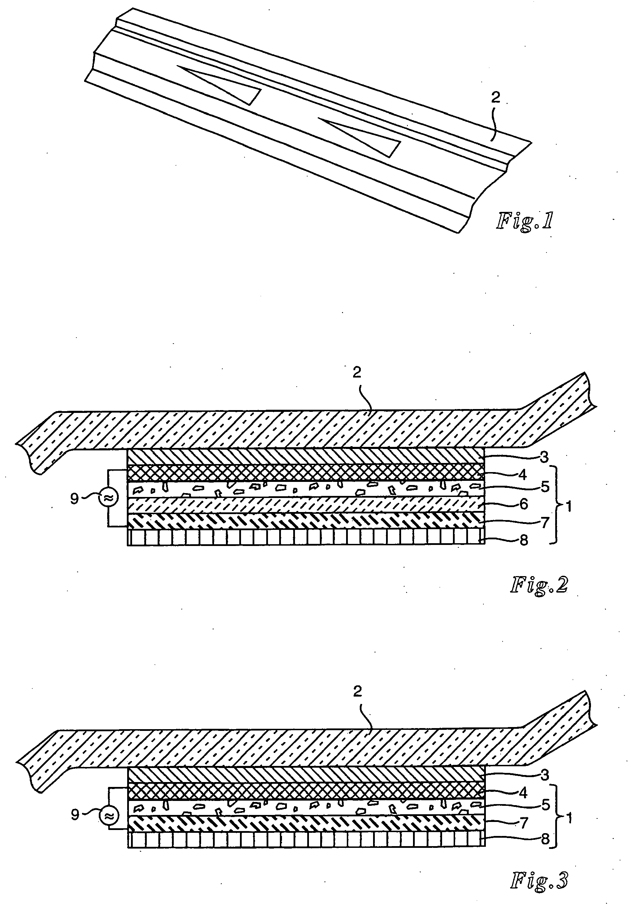

Figur 1 stellt eine erfindungsgemäße beleuchtete Kraftfahrzeug-Einstiegsleiste dar, von der in der Draufsicht nur die Frontseite erkennbar ist. Sie besteht aus einem Körper 2, der mindestens teilweise aus lichtdurchlässigem Kunststoffmaterial besteht und einem darunterliegenden, aufgedruckten Elektrolumineszenzelement. Durch die mindestens teilweise Lichtdurchlässigkeit wird gewährleistet, dass in den lichtdurchlässigen Bereichen das Licht des Elektrolumineszenzelements nach oben durchscheint.

In Figur 2 ist eine erfindungsgemäße Ausführungsform der Kraftfahrzeug-Einstiegsleiste im Schnitt dargestellt. Die Vorderseite der Kraftfahrzeug-Einstiegsleiste ist in der Figur oben angeordnet. Auf der Unterseite des Körpers 2 ist nun unter Zuhilfenahme eines Primers 3 (d.h. einer Oberflächenvorbehandlung zur Gewährleistung der Bedruckbarkeit) ein Elektrolumineszenzelement 1 aufgedruckt. Dieser Aufbau besteht aus einer ersten, transparenten Elektrodenschicht 4 (üblicherweise aus aufgesputtertem Indium-Zinnoxid oder Antimon-Zinnoxid bzw. aus einem vorzugsweise aufgedruckten organischen oder organischen Leitlack), einer Lumineszenzpigmentschicht 5, einer dielektrischen Schicht 6 und einer zweiten Elektrode 7 sowie einem Schutzlaminat 8. Unter Schutzlaminat sind nicht nur Folienschichten zu verstehen, sondern auch gedruckte Schutzschichten oder Materialverbünde.

In der Anwendung im Automobil-Innenbereich und speziell für Einstiegsleisten werden bevorzugt Körper eingesetzt, die eine hohe mechanische Stabilität aufweisen. Bei Einstiegsleisten handelt es sich dabei meist um spritzgegossene Bauteile. Als besonders bevorzugtes Material wird hierbei Polycarbonat verwendet, da es ein besonders kratzfestes Material ist.

Durch die direkte Bedruckung des Körpers 2 mit dem Elektrolumineszenzelement 1 ist der Herstellungsprozeß der Kraftfahrzeug-Einstiegsleiste deutlich vereinfacht und die Kraftfahrzeug-Einstiegsleiste insgesamt dünner als bei Aufbringen einer Elektrolumindeszenzlampe mit beidseitigen Laminatfolien wie im Stand der Technik beschrieben. Es besteht jedoch bei der Materialauswahl des Körpers die Problematik, dass Kunststoffe ausgasen und damit das Elektrolumineszenzelement 1 oder Teile davon angegriffen werden. Es wurde aber überraschenderweise gefunden, dass die Verwendung eines Schutzlaminats 8, das eine geringe Wasserdampfdurchlässigkeit aufweist, die Lebensdauer des Elektrolumineszenzelements 1 erhöhen. Dieser Effekt ist wahrscheinlich darauf zurück zu führen, dass eine in Grenzen wasserdampfdurchlässige Sperrschicht zulässt, dass ausgasende Stoffe des Körpers 2 wieder austreten können, ohne das Elektrolumineszenzelement 1 zu gefährden, und dennoch das Eindringen von Wasserdampf aus der Umgebung hinreichend effektiv verhindert. Die Verwendung eines Schutzlaminats mit einer Wasserdampfdurchlässigkeit im Bereich zwischen 0,35 g/m2/24h bei 38°C und 100% relativer Luftfeuchtigkeit und 10 g/m2/24h bei 38°C und 100% relativer Luftfeuchtigkeit hat sich dabei als wirksam erwiesen.

Bevorzugt wird ein Schutzlaminat eingesetzt, das eine Wasserdampfdurchlässigkeit im Bereich zwischen 0,5 g/m2/24h bei 38°C und 100% relativer Luftfeuchtigkeit und 5 g/m2/ 24h bei 38°C und 100% relativer Luftfeuchtigkeit aufweist. Als besonders vorteilhaft hat sich ein Schutzlaminat erwiesen, das eine Wasserdampfdurchlässigkeit im Bereich zwischen 0,8 g/m2/24h bei 38°C und 100% relativer Luftfeuchtigkeit und 2,5 g/m2/24h bei 38°C und 100% relativer Luftfeuchtigkeit aufweist.

In Figur 3 wird eine vereinfachte Aufbauform der in Figur 2 beschriebenen Ausführungsform gezeigt, die analog nummeriert ist. Hierbei ist die dielektrische Schicht 6 weggelassen. Stattdessen ist die Lumineszenzpigmentschicht 5 in diesem Falle so ausgestattet, dass sie selbst elektrisch isolierend wirkt und es nicht zu einer direkten Stromleitung zwischen der ersten und der zweiten Elektrodenschicht kommt.

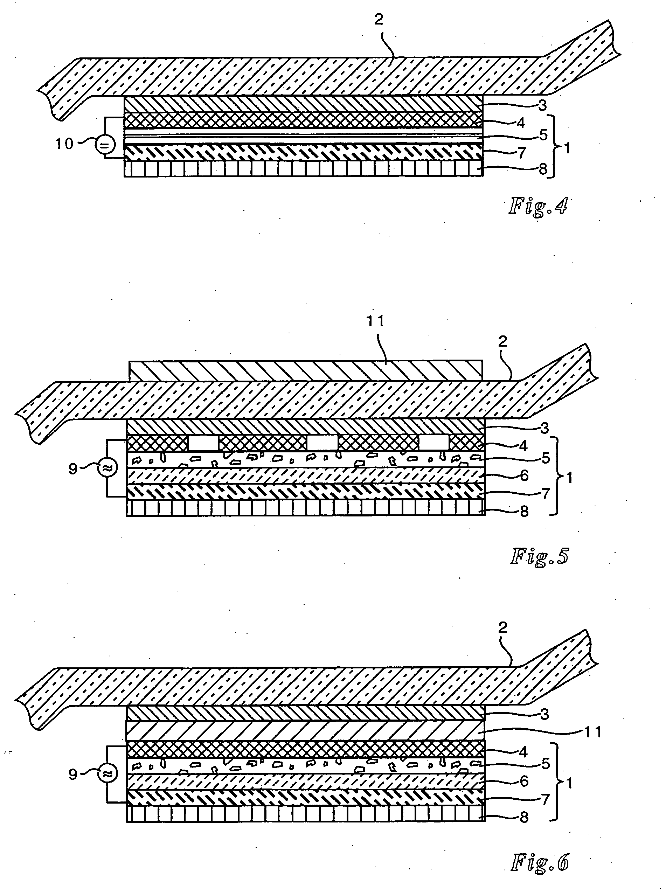

Die Erfindung ist sowohl für Elektrolumineszenzelemente 1, bei denen die Lumineszenzpigmentschicht 5 eine durch eine elektrische Wechselspannung 9 aktivierbare anorganische Dickschicht ist, als auch für solche geeignet, bei denen die Lumineszenzpigmentschicht 5 eine durch eine elektrische Gleichspannung aktivierbare organische Dünnschicht ist. Diesen Unterschied stellt Figur 4 vereinfacht dar, bei der im Vergleich zu Figur 3 eine Gleichspannung 10 angelegt ist und die Lumineszenzpigmentschicht 5 als organische Pigmentschicht ausgebildet ist.

Anhand der Figuren 5-7 wird eine zweite, besonders bevorzugte Ausführungsform der Erfindung näher beschrieben. Sie integriert in den prinzipiell beschriebenen Aufbau eines mit einem Elektrolumineszenzelement bedruckten, mindestens teilweise transparenten Körpers eine grafische Schicht, vorzugsweise aus gedrucktem sogenannten grafischen Silber, die sowohl dekorative Zwecke erfüllen als auch grafische Elemente, beispielsweise Buchstaben, Bilder oder Symbole hervorbringen kann.

Figur 5 zeigt einen derartigen Aufbau mit den in Figur 2 beschriebenen Schichten, der zusätzlich eine Metallschicht 11, vorzugsweise eine transluzente Metallschicht aufweist, die auf die Frontseite aufgebracht wurde. Durch die Transluzenz der Metallschicht 11 kann das Elektrolumineszenzelement 1 in den dafür vorgesehenen Bereichen durch die Metallschicht durchleuchten. Es ergibt sich so im ausgeschalteten Zustand des Elektrolumineszenzelement der Eindruck einer metallischen Dekorabdeckung, durch die nach dem Anschalten grafische Elemente durchscheinen.

Figur 6 zeigt den selben Aufbau mit dem Unterschied, dass die transluzente Metallschicht 11 nun auf der Rückseite des Körpers 2 angeordnet wurde und somit in das Elektrolumineszenzelement 1 integriert ist. Diese Variante hat den Vorteil, dass auch die Metallschicht 11 vor Verkratzen oder anderen Einflüssen, speziell im Einstiegsbereich von Automobilen, geschützt ist.

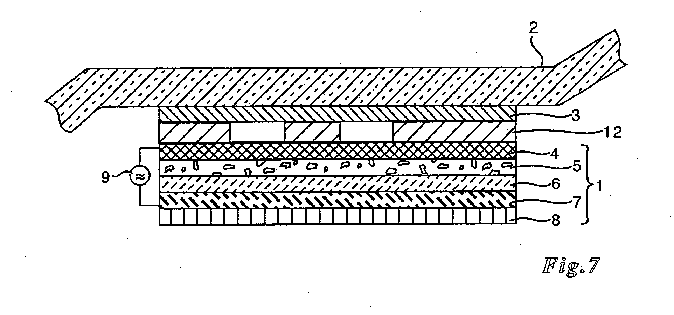

Figur 7 stellt einen ähnlichen Aufbau dar, wobei eine Maskenschicht 12 anstatt der durchgehenden Metallschicht vorgesehen ist. Im Unterschied zur Metallschicht in den Figuren 5 und 6 ist die Maskenschicht nicht transluzent, sondern opak. Während bei den beiden vorherigen Ausführungsformen zur Darstellung von Buchstaben, Bildern oder Symbolen mindestens eine der Elektroden 4 und/oder 7 oder die Lumineszenzpigmentschicht 5 eine entsprechende Kontur aufweisen mussten, wird diese Kontur nun durch die Maskenschicht als Negativ bereitgestellt.

## Patentansprüche

1. Beleuchtete Kraftfarirzeug-Einstiegsleiste mit einer Frontseite und einer Rückseite, welche Kraftfahrzeug-Einstiegsleiste einen Körper (2) aus mindestens teilweise lichtdurchlässigem Kunststoffmaterial und mindestens ein auf die Rückseite des Körpers (2) aufgedrucktes Elektrolumineszenzelement (1) aufweist.

2. Beleuchtete Kraftfahrzeug-Einstiegsleiste nach Anspruch 1, bei der der Körper (2) als Kraftfahrzeug-Innenleiste ausgebildet ist.

3. Beleuchtete Kraftfahrzeug-Einstiegsleiste nach einem der vorhergehenden Ansprüche, bei der das Elektrolumineszenzelement (1) eine lichtdurchlässige erste Elektrode (4), eine Lumineszenzpigmentschicht (5) und eine zweite Elektrode (7) aufweist.

4. Beleuchtete Kraftfahrzeug-Einstiegsleiste nach Anspruch 3, bei der das Elektrolumineszenzelement (1) eine lichtdurchlässige erste Elektrode (4), eine Lumineszenzpigmentschicht (5), eine zweite Elektrode (7) und ein Schutzlaminat (8) aufweist.

5. Beleuchtete Kraftfahrzeug-Einstiegsleiste nach einem der Ansprüche 3 oder 4, bei der das Elektrolumineszenzelement (1) eine dielektrische Schicht (6) aufweist.

6. Beleuchtete Kraftfahrzeug-Einstiegsleiste nach einem der Ansprüche 3 - 5, bei der die Lumineszenzpigmentschicht (5) eine durch eine elektrische Wechselspannung (9) aktivierbare anorganische Dickschicht ist.

7. Beleuchtete Kraftfahrzeug-Einstiegsleiste nach einem der Ansprüche 3 - 6, bei der die Lumineszenzpigmentschicht (5) eine durch eine elektrische Gleichspannung (10) aktivierbare organische Dünnschicht ist.

8. Beleuchtete Kraftfahrzeug-Einstiegsleiste nach einem der vorhergehenden Ansprüche, bei der der Körper (2) aus Kunststoffmaterial ein Spritzgußkörper ist.

9. Beleuchtete Kraftfahrzeug-Einstiegsleiste nach einem der vorhergehenden Ansprüche, bei der der Körper (2) als Kunststoffmaterial Polycarbonat enthält.

10. Beleuchtete Kraftfahrzeug-Einstiegsleiste nach einem der vorhergehenden Ansprüche, die eine transluzente Schicht (11) aufweist.

11. Beleuchtete Kraftfahrzeug-Einstiegsleiste nach Anspruch 12, die eine transluzente Metallschicht (11) (grafisches Silber) aufweist.

12. Beleuchtete Kraftfahrzeug-Einstiegsleiste nach einem der Ansprüche 10 oder 11, bei der die transluzente Schicht (11) auf der Frontseite angeordnet ist.

13. Beleuchtete Kraftfahrzeug-Einstiegsleiste nach einem der Ansprüche 10 - 12, bei der die transluzente Schicht (11) auf der Rückseite angeordnet ist.

14. Beleuchtete Kraftfahrzeug-Einstiegsleiste nach einem der Ansprüche 10 - 13, bei der die transluzente Schicht (11) in dem Lumineszenzelement eingeschlossen ist.

15. Beleuchtete Kraftfahrzeug-Einstiegsleiste nach einem der vorhergehenden Ansprüche, bei der das Schutzlaminat (8) eine Wasserdampfdurchlässigkeit im Bereich zwischen 0,35 g/m2/24h bei 38ºC und 100% relativer Luftfeuchtigkeit und 10 g/m2/24h bei 38ºC und 100% relativer Luftfeuchtigkeit aufweist.

16. Beleuchtete Kraftfahrzeug-Einstiegsleiste nach einem der vorhergehenden Ansprüche, bei der das Schutzlaminat (8) eine Wasserdampfdurchlässigkeit im Bereich zwischen 0,5 g/m2/24h bei 38ºC und 100% relativer Luftfeuchtigkeit und 5 g/m2/24h bei 38ºC und 100% relativer Luftfeuchtigkeit aufweist.

17. Beleuchtete Kraftfahrzeug-Einstiegsleiste nach einem der vorhergehenden Ansprüche, bei der das Schutzlaminat (8) eine Wasserdampfdurchlässigkeit im Bereich zwischen 0,8 g/m2/24h bei 38ºC und 100% relativer Luftfeuchtigkeit und 2,5 g/m2/24h bei 38ºC und 100% relativer Luftfeuchtigkeit aufweist.

18. Beleuchtete Kraftfahrzeug-Einstiegsleiste nach einem der vorhergehenden Ansprüche, bei der mindestens eine der Elektroden (4, 7) eine Kontur in Form von Buchstaben, eines Bildes oder eines Symbols aufweist.

19. Beleuchtete Kraftfahrzeug-Einstiegsleiste nach einem der vorhergehenden Ansprüche, bei der zwischen der Lumineszenzpigmentschicht (5) und dem Körper (2) eine Maskenschicht (12) vorgesehen ist.

## Claims

1. An illuminated motor vehicle entrance sill having a front side and a back side, this motor vehicle entrance sill having a body (2) made of at least partially light-transparent plastic material and at least one electroluminescent element (1) printed onto the back side of the body (2).

2. The illuminated motor vehicle entrance sill according to Claim 1, wherein the body (2) is implemented as a motor vehicle interior sill.

3. The illuminated motor vehicle entrance sill according to one of the preceding claims, wherein the electroluminescent element (1) has a light-transparent first electrode (4), a luminescent pigment layer (5), and a second electrode (7).

4. The illuminated motor vehicle entrance sill according to Claim 3, wherein the electroluminescent element (1) has a light-transparent first electrode (4), a luminescent pigment layer (5), a second electrode (7), and a protective laminate (8).

5. The illuminated motor vehicle entrance sill according to one of Claims 3 or 4, wherein the electroluminescent element (1) has a dielectric layer (6).

6. The illuminated motor vehicle entrance sill according to one of Claims 3 through 5, wherein the luminescent pigment layer (5) is an inorganic thick layer activatable by an electrical AC voltage (9).

7. The illuminated motor vehicle entrance sill according to one of Claims 3 through 6, wherein the luminescent pigment layer (5) is an organic thin layer activatable by an electrical DC voltage (10).

8. The illuminated motor vehicle entrance sill according to one of the preceding claims, wherein the body (2) made of plastic material is an injection-molded body.

9. The illuminated motor vehicle entrance sill according to one of the preceding claims, wherein the body (2) made of plastic material contains polycarbonate.

10. The illuminated motor vehicle entrance sill according to one of the preceding claims, which has a translucent layer (11).

11. The illuminated motor vehicle entrance sill according to Claim 12, which has a translucent metal layer (11) (graphic silver).

12. The illuminated motor vehicle entrance sill according to one of Claims 10 or 11, wherein the translucent layer (11) is situated on the front side.

13. The illuminated motor vehicle entrance sill according to one of Claims 10 through 12, wherein the translucent layer (11) is situated on the back side.

14. The illuminated motor vehicle entrance sill according to one of Claims 10 through 13, wherein the translucent layer (11) is enclosed in the luminescent element.

15. The illuminated motor vehicle entrance sill according to one of the preceding claims, wherein the protective laminate (8) has a water vapor permeability in the range between 0.35 g/m²/24 hours at 38°C and 100% relative ambient humidity and 10 g/m²/24 hours at 38°C and 100% relative ambient humidity.

16. The illuminated motor vehicle entrance sill according to one of the preceding claims, wherein the protective laminate (8) has a water vapor permeability in the range between 0.5 g/m²/24 hours at 38°C and 100% relative ambient humidity and 5 g/m²/24 hours at 38°C and 100% relative ambient humidity.

17. The illuminated motor vehicle entrance sill according to one of the preceding claims, wherein the protective laminate (8) has a water vapor permeability in the range between 0.8 g/m²/24 hours at 38°C and 100% relative ambient humidity and 2.5 g/m²/24 hours at 38°C and 100% relative ambient humidity.

18. The illuminated motor vehicle entrance sill according to one of the preceding claims, wherein at least one of the electrodes (4, 7) has a contour in the shape of letters, an image, or a symbol.

19. The illuminated motor vehicle entrance sill according to one of the preceding claims, wherein a mask layer (12) is provided between the luminescent pigment layer (5) and the body (2).

## Revendications

1. Bordure d'entrée dans un véhicule automobile éclairée et comprenant une face frontale et une face postérieure, laquelle bordure d'entrée dans un véhicule comprend un corps (2) fait de matière plastique au moins partiellement transparente et au moins un élément électroluminescent (1) imprimé sur la face postérieure du corps (2).

2. Bordure d'entrée dans un véhicule automobile éclairée selon la revendication 1, dans laquelle le corps (2) est réalisé sous forme d'une bordure intérieure de véhicule automobile.

3. Bordure d'entrée dans un véhicule automobile éclairée selon une des revendications précédentes, dans laquelle l'élément électroluminescent (1) comporte une première électrode transparente (4), une couche pigmentée luminescente (5) et une deuxième électrode (7).

4. Bordure d'entrée dans un véhicule automobile éclairée selon la revendication 3, dans laquelle l'élément électroluminescent (1) comporte une première électrode transparente (4), une couche pigmentée luminescente (5), une deuxième électrode (7) et un laminé protecteur (8).

5. Bordure d'entrée dans un véhicule automobile éclairée selon une des revendications 3 ou 4, dans laquelle l'élément électroluminescent (1) comporte une couche diélectrique (6).

6. Bordure d'entrée dans un véhicule automobile éclairée selon une des revendications 3 à 5, dans laquelle la couche pigmentée luminescente (5) est une couche épaisse anorganique activable par une tension électrique alternative (9).

7. Bordure d'entrée dans un véhicule automobile éclairée selon une des revendications 3 à 6, dans laquelle la couche pigmentée luminescente (5) est une couche mince anorganique activable par une tension électrique continue (10).

8. Bordure d'entrée dans un véhicule automobile éclairée selon une des revendications précédentes, dans laquelle le corps (2) en matière plastique est un corps moulé par injection.

9. Bordure d'entrée dans un véhicule automobile éclairée selon une des revendications précédentes, dans laquelle le corps (2) contient comme matière plastique du polycarbonate.

10. Bordure d'entrée dans un véhicule automobile éclairée selon une des revendications précédentes, comportant une couche translucide (11).

11. Bordure d'entrée dans un véhicule automobile éclairée selon la revendication 12, comportant une couche métallique translucide (11) (argent graphique).

12. Bordure d'entrée dans un véhicule automobile éclairée selon une des revendications 10 ou 11, dans laquelle la couche translucide (11) est disposée sur la face frontale.

13. Bordure d'entrée dans un véhicule automobile éclairée selon une des revendications 10 à 12, dans laquelle la couche translucide (11) est disposée sur la face postérieure.

14. Bordure d'entrée dans un véhicule automobile éclairée selon une des revendications 10 à 13, dans laquelle la couche translucide (11) est incluse dans l'élément luminescent.

15. Bordure d'entrée dans un véhicule automobile éclairée selon une des revendications précédentes, dans laquelle le laminé protecteur (8) a une perméabilité à la vapeur d'eau comprise entre 0,35 g/m²/24 h à 38° C et à 100 % d'hygrométrie relative et 10 g/m²/24 h à 38° C et à 100 % d'hygrométrie relative.

16. Bordure d'entrée dans un véhicule automobile éclairée selon une des revendications précédentes, dans laquelle le laminé protecteur (8) a une perméabilité à la vapeur d'eau comprise entre 0,5 g/m²/24 h à 38° C et à 100 % d'hygrométrie relative et 5 g/m²/24 h à 38° C et à 100 % d'hygrométrie relative.

17. Bordure d'entrée dans un véhicule automobile éclairée selon une des revendications précédentes, dans laquelle le laminé protecteur (8) a une perméabilité à la vapeur d'eau comprise entre 0,8 g/m²/24 h à 38° C et à 100 % d'hygrométrie relative et 2,5 g/m²/24 h à 38° C et à 100 % d'hygrométrie relative.

18. Bordure d'entrée dans un véhicule automobile éclairée selon une des revendications précédentes, dans laquelle au moins une des électrodes (4, 7) a un contour épousant la forme de lettres, d'une image ou d'un symbole.

19. Bordure d'entrée dans un véhicule automobile éclairée selon une des revendications précédentes, dans laquelle il est prévu entre la couche pigmentée luminescente (5) et le corps (2) une couche de masquage (12).
